# EUROPEAN PATENT SPECIFICATION

(11) **EP 3 228 654 B1**
(45) Date of publication and mention of the grant of the patent: **24.02.2021**
(21) Application number: 15865243.8
(22) Date of filing: 13.11.2015
(51) Int. Cl.: C08G 81/02, C08J 5/18, C08J 7/04

(54) **GAS BARRIER POLYMER, GAS BARRIER FILM, AND GAS BARRIER LAMINATE**
GASSPERRPOLYMER, GASSPERRFOLIE UND GASSPERRLAMINAT
POLYMÈRE, FILM ET STRATIFIÉ FAISANT BARRIÈRE AUX GAZ

(30) Priority: 04.12.2014 JP 2014246067
(43) Date of publication of application: 11.10.2017
(73) Proprietor: Mitsui Chemicals Tohcello, Inc., Tokyo 101-8485 (JP)
(72) Inventor: KIDOKORO Masako, Koga-shi Ibaraki 306-0213 (JP); NOMOTO Akira, Koga-shi Ibaraki 306-0213 (JP)
(74) Representative: Hoffmann Eitle
(86) International application number: PCT/JP2015/082011
(87) International publication number: WO 2016/088534

(56) References cited:
- JP-A- 2005 225 940
- JP-A- 2013 010 857
- DATABASE WPI Week 201171 Thomson Scientific, London, GB; AN 2011-N30439 XP002781513, & JP 2011 213037 A (KOHJIN CO LTD) 27 October 2011 (2011-10-27)
- DATABASE WPI Week 200724 Thomson Scientific, London, GB; AN 2007-236443 XP002781514, & KR 100 614 984 B1 (NAM G S) 25 August 2006 (2006-08-25)

## Description

### TECHNICAL FIELD

The present invention relates to a gas barrier polymer, a gas barrier film, and a gas barrier laminate.

### BACKGROUND ART

In general, as a gas barrier material, a laminate which is provided with an inorganic material layer as a gas barrier layer on a base material layer is used.

However, this inorganic material layer is weak against friction and the like, and in such a gas barrier laminate, cracks are formed in the inorganic material layer due to rubbing or elongation at the time of post-processing printing, laminating, or content filling, and the gas barrier property may decrease.

Therefore, as a gas barrier material, laminates using an organic material layer as a gas barrier layer are also used.

As a gas barrier material using an organic material layer as the gas barrier layer, a laminate which is provided with a gas barrier layer formed of a mixture including a polycarboxylic acid and a polyamine compound is known.

Examples of techniques related to such a gas barrier laminate include those described in Patent Document 1 (Japanese Unexamined patent publication No. 2005-225940) and Patent Document 2 (Japanese Unexamined patent publication No. 2013-10857).

Patent Document 1 discloses a gas barrier film having a gas barrier layer film-formed from a polycarboxylic acid and a polyamine and/or a polyol and having a polycarboxylic acid cross-linking degree of 40% or more.

Patent Document 1 describes that, even under high humidity conditions, such a gas barrier film has excellent gas barrier properties similar to those under low humidity conditions.

Patent Document 2 discloses a film formed by coating at least one side of a base material formed of a plastic film with a mixture formed by mixing polyamine and polycarboxylic acid at a weight ratio of polyamine/polycarboxylic acid=12.5/87.5 to 27.5/72.5.

Patent Document 2 describes that such a gas barrier film has excellent gas barrier properties, particularly oxygen barrier properties even after a boiling treatment, and is excellent in flexibility, transparency, moisture resistance, chemical resistance and the like.

### RELATED DOCUMENT

### PATENT DOCUMENT

[Patent Document 1] Japanese Unexamined patent publication No. 2005-225940
[Patent Document 2] Japanese Unexamined patent publication No. 2013-10857
JP 2011-213037 (A) describes a gas barrier film obtained by coating a mixture of polyamine and polycarboxylic acid onto at least one surface of a base material made of a plastic film.
KR 100614984 relates to a film and a laminate comprising a complex of a polycarboxylic acid polymer and a polyamine polymer and having excellent gas barrier properties.

### SUMMARY OF THE INVENTION

The technical levels required for the various characteristics of gas barrier material are increasing more and more. The present inventors found the following problems relating to the gas barrier materials of the related art as described in Patent Documents 1 and 2.

First, for the gas barrier film as described in Patent Documents 1 and 2, the gas barrier performance under high humidity and the gas barrier performance after a boil and retort treatment are still insufficient.

In addition, the gas barrier film described in Patent Document 1 is inferior in terms of productivity since heating at a high temperature for a long time is necessary for the cross-linking of polycarboxylic acid and polyamine. Furthermore, since the heat treatment is performed at a high temperature for a long time, the obtained gas barrier films are colored and the appearance thereof is inferior.

In addition, it was clear that the gas barrier film described in Patent Document 2 mainly includes ionic cross-linking of polycarboxylic acid and polyamine, and the polyamide bond amount is small. Therefore, this gas barrier film was inferior in the oxygen barrier property and water vapor barrier property under high humidity. In addition, since it was necessary to thicken the barrier layer from the viewpoint of securing barrier performance, shrinkage of the film was great, the dimensional stability was inferior, and the handling was difficult.

As described above, the present inventors found that the gas barrier material of the related art as described in Patent Documents 1 and 2 has an insufficient gas barrier performance under high humidity and gas barrier performance after a boil and retort treatment.

Furthermore, the present inventors found that, in the gas barrier material of the related art as described in Patent Documents 1 and 2, there is a trade-off relationship between the gas barrier performance, appearance, dimensional stability, and productivity. That is, the present inventors found that the gas barrier material of the related art has room for improvement from the viewpoint of improving the gas barrier performance, appearance, dimensional stability, and productivity in a well-balanced manner.

Although there have been many techniques focusing on improving the gas barrier performance so far, no techniques have been reported so far to improve the gas barrier performance, the appearance, the dimensional stability, and the productivity in a well-balanced manner.

The present invention has been made in view of the above circumstances, and it is an object of the present invention to provide a gas barrier polymer capable of realizing a gas barrier film and a gas barrier laminate excellent in the balance between appearance, dimensional stability, and productivity while excelling in gas barrier performance under both high humidity conditions and after a boil and retort treatment, and a gas barrier film and a gas barrier laminate using the same.

The present inventors conducted intensive studies to achieve the object described above. As a result, the present invention was completed with the knowledge that, in the gas barrier polymer formed from a mixture including the polycarboxylic acid and the polyamine compound, the scale of the ratio of the absorption peak area derived from the amide bond in the infrared absorption spectrum is effective as a design guideline for improving the performance balance of the gas barrier property, appearance, dimensional stability, productivity, and the like.

That is, according to the present invention, the gas barrier polymer, gas barrier film, and gas barrier laminate shown below are provided.

[1] A gas barrier polymer formed by heating a mixture including a polycarboxylic acid and a polyamine compound, in which, in an infrared absorption spectrum of the gas barrier polymer, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹ and equal to or less than 1690 cm⁻¹ is B, an area ratio of an amide bond indicated by B/A is 0.370 or more,
   and wherein, in the infrared absorption spectrum, when a total peak area in a range of an absorption band of equal to or more than 1493 cm⁻¹ and equal to or less than 1598 cm⁻¹ is D, an area ratio of a carboxylate indicated by D/A is 0.450 or less.
[2] The gas barrier polymer according to [1], in which, in the infrared absorption spectrum, when a total peak area in a range of an absorption band of equal to or more than 1690 cm⁻¹ and equal to or less than 1780 cm⁻¹ is C, an area ratio of a carboxylic acid indicated by C/A is 0.500 or less.
[3] The gas barrier polymer according to [1] or [2], in which (mol number of -COO- groups included in the polycarboxylic acid in the mixture)/(mol number of amino groups included in the polyamine compound in the mixture) =more than 100/22 and equal to or less than 100/99.
[4] The gas barrier polymer according to any one of [1] to [3], in which the polycarboxylic acid includes one type or two or more types of polymers selected from polyacrylic acid, polymethacrylic acid, and copolymers of acrylic acid and methacrylic acid.
[5] A gas barrier film including the gas barrier polymer according to any one of [1] to [4].
[6] A gas barrier laminate including a base material layer; and a gas barrier layer provided on at least one surface of the base material layer and including the gas barrier polymer according to any one of [1] to [4] .
[7] The gas barrier laminate according to [6], further including an inorganic material layer between the base material layer and the gas barrier layer.
[8] The gas barrier laminate according to [7], in which the inorganic material layer is formed of one type or two or more types of inorganic materials selected from the group consisting of silicon oxide, aluminum oxide, and aluminum.
[9] The gas barrier laminate according to any one of [6] to [8], in which the gas barrier layer further includes a surfactant.
[10] The gas barrier laminate according to any one of [6] to [9], in which, when a gas barrier laminate cut out into a 5 cm square is placed on a platen and a maximum interval occurring between the gas barrier laminate and the platen is defined as warpage, the warpage measured by a gap gauge at 23°C is 5 mm or less.
[11] The gas barrier laminate according to any one of [6] to [10], in which the base material layer includes at least one selected from a thermosetting resin and a thermoplastic resin.
[12] The gas barrier laminate according to any one of [6] to [11], in which a thickness of the gas barrier layer is equal to or more than 0.01 µm and equal to or less than 15 µm.
[13] The gas barrier laminate according to any one of [6] to [12], in which an oxygen permeability at 20°C and 90% RH in 1 µm of the gas barrier layer is 30 ml/(m²·day·MPa) or less.

According to the present invention, it is possible to provide a gas barrier polymer capable of realizing a gas barrier film and a gas barrier laminate excellent in the balance between appearance, dimensional stability, and productivity while excelling in gas barrier performance under both high humidity conditions and after a boil and retort treatment, and a gas barrier film and a gas barrier laminate using the same.

### BRIEF DESCRIPTION OF THE DRAWINGS

The above objects and other objects, features and advantages will become more apparent from the following description of the preferable embodiments and the accompanying drawings.

FIG. 1 is a cross-sectional view schematically showing an example of a structure of a gas barrier laminate of an embodiment according to the present invention.
FIG. 2 is a cross-sectional view schematically showing an example of a structure of a gas barrier laminate of an embodiment according to the present invention.

### DESCRIPTION OF EMBODIMENTS

Description will be given below of embodiments of the present invention with reference to the drawings. Note that, the figure is a schematic view and does not match the actual size ratio. Note that, "to" between numbers in the sentences means "equal to or more than first number and equal to or less than second number" unless otherwise noted.

### <Gas Barrier Polymer>

The gas barrier polymer according to the present embodiment is formed by heating a mixture including a polycarboxylic acid and a polyamine compound. That is, the gas barrier polymer according to the present embodiment is formed of a cross-linked body of a mixture including a polycarboxylic acid and a polyamine compound. Then, in the infrared absorption spectrum of the gas barrier polymer, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹ and equal to or less than 1690 cm⁻¹ is B, an area ratio of an amide bond indicated by B/A is 0.370 or more, preferably 0.400 or more, more preferably 0.420 or more, and particularly preferably 0.430 or more, from the viewpoint of the gas barrier property. In addition, from the viewpoint of further improving the balance between appearance, dimensional stability, and productivity, the upper limit of the area ratio of the amide bond indicated by B/A is preferably 0.600 or less, more preferably 0.550 or less, and particularly preferably 0.500 or less.

Here, although description will be given below of the gas barrier polymer according to the present embodiment, it is possible to obtain the gas barrier polymer by heating a mixture including a polycarboxylic acid and a polyamine compound in a specific ratio (also referred to below as a gas barrier coating material) under specific heating conditions.

In the gas barrier polymer according to the present embodiment, absorption based on *v*C=O of the unreacted carboxylic acid in the infrared absorption spectrum is observed in the vicinity of 1700 cm⁻¹ and absorption based on *v*C=O of the amide bond which is a cross-linked structure is observed in the vicinity of 1630 to 1685 cm⁻¹, and absorption based on carboxylate *v*C=O is observed in the vicinity of 1540 to 1560 cm⁻¹.

That is, in the present embodiment, it is considered that the total peak area A in the range of the absorption band of equal to or more than 1493 cm⁻¹ and equal to or less than 1780 cm⁻¹ in the infrared absorption spectrum represents an index of the total amount of the carboxylic acid, the amide bond, and the carboxylate, the total peak area B in the range of the absorption band of equal to or more than 1598 cm⁻¹ and equal to or less than 1690 cm⁻¹ represents an index of the amount of existence of amide bonds, the total peak area C in the range of the absorption band of equal to or more than 1690 cm⁻¹ and equal to or less than 1780 cm⁻¹ described below represents an index of the amount of the unreacted carboxylic acid present therein, the total peak area D in the range of an absorption band of equal to or more than 1493 cm⁻¹ and equal to or less than 1598 cm⁻¹ described below represents an index of the amount of the carboxylate present therein, that is, the ionic cross-linking of the carboxyl group and the amino group.

Note that, in the present embodiment, it is possible to measure the total peak areas A to D by the following procedure. First, a 1 cm × 3 cm measurement sample is cut out from the gas barrier film or the gas barrier layer formed by the gas barrier polymer of the present embodiment. Next, the infrared absorption spectrum of the surface of the gas barrier film or the gas barrier layer is obtained by infrared total reflection measurement (ATR method) . From the obtained infrared absorption spectrum, the total peak areas A to D described above are calculated by the following steps (1) to (4) .
(1) Connect the absorbance at 1780 cm⁻¹ and 1493 cm⁻¹ by a straight line (N) and let the area surrounded by the absorption spectrum in the range of an absorption band of equal to or more than 1493 cm⁻¹ and equal to or less than 1780 cm⁻¹ and N be the total peak area A.
(2) Draw a straight line (O) vertically downward from an absorbance (Q) at 1690 cm⁻¹, let P be the intersection of N and O, draw a straight line (S) vertically downward from an absorbance (R) at 1598 cm⁻¹, let T be the intersection of N and S, and let the area surrounded by the absorption spectrum in the range of an absorption band of equal to or more than 1598 cm⁻¹ and equal to or less than 1690 cm⁻¹, the straight line S, the point T, the straight line N, the point P, the straight line O, the absorbance Q, and the absorbance R be the total peak area B.
(3) Let the area surrounded by the absorption spectrum in the range of an absorption band of equal to or more than 1690 cm⁻¹ and equal to or less than 1780 cm⁻¹, the absorbance Q, the straight line O, the point P, and the straight line N be the total peak area C.
(4) Let the area surrounded by the absorption spectrum in the range of an absorption band of equal to or more than 1493 cm⁻¹ and equal to or less than 1598 cm⁻¹, the absorbance R, the straight line S, the point T, and the straight line N be the total peak area D.

Next, area ratios B/A, C/A, and D/A are obtained from the area obtained by the above method.

Note that, it is possible for the measurement of the infrared absorption spectrum (infrared total reflection measurement: ATR method) of the present embodiment to be carried out, for example, using an IRT-5200 apparatus manufactured by JASCO International Co., Ltd., mounted with PKM-GE-S (Germanium) crystals, under conditions of an incident angle of 45°, room temperature, a resolution of 4 cm⁻¹, and an integration number of 100 times.

In order to solve the problem described in the section of the problem to be solved by the present invention, the present inventors researched adjusting the blending ratio of the polycarboxylic acid and the polyamine compound which are the raw materials of the gas barrier polymer.

However, it was clear that merely adjusting the blending ratio of the polycarboxylic acid and the polyamine compound did not make it possible to sufficiently improve the gas barrier properties such as oxygen barrier property, water vapor barrier property and the like under conditions of both high humidity and after a boil and retort treatment.

Here, the present inventors found that, in a gas barrier polymer formed by a mixture including a polycarboxylic acid and a polyamine compound, there are two types of cross-linked structures, ionic cross-linking and amide cross-linking, and the occurrence ratio of these cross-linking structures is important from the viewpoint of improving the gas barrier performance. Note that, the ionic cross-linking described above is generated by the acid-base reaction of the carboxyl group included in the polycarboxylic acid and the amino group included in the polyamine compound, and the amide cross-linking described above is generated by a dehydration condensation reaction of the carboxyl group included in the polycarboxylic acid and the amino group included in the polyamine compound.

Accordingly, the present inventors carried out more intensive research while paying attention to the scale, that is, the area ratio of the amide bond indicated by B/A described above proposed by present inventors as a design guideline for improving the performance balance of the appearance, dimensional stability, and productivity while improving the gas barrier performance such as the oxygen barrier property, the water vapor barrier property, and the like under conditions of both high humidity and after a boil and retort treatment.

As a result, controlling the manufacturing conditions to a high degree makes it possible to adjust the area ratio of the amide bond indicated by B/A described above of the gas barrier polymer to a specific value or more, and the inventors found that the gas barrier polymer having such a characteristic more effectively exhibits a gas barrier property under conditions of both high humidity and after a boil and retort treatment, and is also excellent in the balance between appearance, dimensional stability, and productivity.

That is, using a gas barrier polymer having an amide bond area ratio indicated by B/A of the above lower limit value or more makes it possible to realize a gas barrier film and a gas barrier laminate excellent in the balance between appearance, dimensional stability, and productivity while excellent in the oxygen barrier property and the water vapor barrier property under conditions of both high humidity and after a boil and retort treatment.

Note that, the present inventors confirmed that the area ratio of the amide bond indicated by B/A described above of the gas barrier material of the related art as described in Patent Documents 1 and 2 is less than 0.370.

Although the reason why such a gas barrier polymer is excellent in the performance balance described above is not necessarily clear, it is considered that this is because the gas barrier polymer having the area ratio of the amide bond indicated by B/A in the above range is formed of a dense structure where the two types of cross-linking structures of the ionic cross-linking and amide cross-linking are well-balanced.

That is, it is considered that the fact that the area ratio of the amide bond indicated by B/A is within the above range means that the two types of cross-linking structures of the ionic cross-linking and amide cross-linking are formed in a well-balanced manner.

For the gas barrier polymer according to the present embodiment, in the infrared absorption spectrum of the gas barrier polymer, when a total peak area in a range of an absorption band of equal to or more than 1690 cm⁻¹ and equal to or less than 1780 cm⁻¹ is C, an area ratio of a carboxylic acid indicated by C/A is preferably 0.150 or more, more preferably 0.170 or more, even more preferably 0.220 or more, still more preferably 0.250 or more, and particularly preferably 0.270 or more from the viewpoint of further improving the balance between appearance, dimensional stability, and productivity.

From the viewpoint of further improving the oxygen barrier property and the water vapor barrier property even further under both conditions of high humidity and after a boil and retort treatment, the upper limit of the area ratio of the carboxylic acid indicated by C/A is, preferably 0.500 or less, more preferably 0.450 or less, even more preferably 0.420 or less, particularly preferably 0.400 or less.

For the gas barrier polymer according to the present embodiment in the infrared absorption spectrum of the gas barrier polymer, when a total peak area in a range of an absorption band of equal to or more than 1493 cm⁻¹ and equal to or less than 1598 cm⁻¹ is D, an area ratio of carboxylate indicated by D/A is preferably 0.100 or more, more preferably 0.150 or more, and particularly preferably 0.160 or more from the viewpoint of further improving the oxygen barrier property and the water vapor barrier property even further under both conditions of high humidity and after a boil and retort treatment.

In addition, from the viewpoint of further improving the balance between appearance, dimensional stability, and productivity, the upper limit of the area ratio of the carboxylate indicated by D/A is 0.450 or less, preferably 0.420 or less, more preferably 0.400 or less, still more preferably 0.300 or less, and particularly preferably 0.270 or less.

The area ratio of the amide bond indicated by B/A, the area ratio of carboxylic acid indicated by C/A, and the area ratio of carboxylate indicated by D/A of the gas barrier polymer according to the present embodiment are able to be controlled by properly adjusting the manufacturing conditions of the gas barrier polymer.

In the present embodiment, in particular, the blending ratio of the polycarboxylic acid and the polyamine compound, the method of preparing the gas barrier coating material, the method, temperature, time, and the like of the heat treatment of the gas barrier coating material are examples of factors for controlling the area ratio of the amide bond indicated by B/A, the area ratio of the carboxylic acid indicated by C/A, and the area ratio of the carboxylate indicated by D/A.

### <Method for Manufacturing Gas Barrier Polymer>

The method for manufacturing the gas barrier polymer according to the present embodiment is different from the manufacturing methods of the related art. In order to obtain the gas barrier polymer according to the present embodiment, it is important to tightly control the manufacturing conditions such as the blending ratio of the polycarboxylic acid and the polyamine compound, the method of preparing the gas barrier coating material, and the method, temperature, time, and the like of the heat treatment of the gas barrier coating material. That is, it is possible to obtain the gas barrier polymer according to the present embodiment for the first time by a manufacturing method tightly controlling various factors relating to the following three conditions.
(1) Blending ratio of polycarboxylic acid and polyamine compound
(2) Method for preparing gas barrier coating material
(3) Method, temperature, and time of heat treatment of gas barrier coating material

Description will be given below of an example of the method for manufacturing the gas barrier polymer according to the present embodiment.

First, description will be given of (1) the blending ratio of the polycarboxylic acid and polyamine compound.

### (Blending ratio of polycarboxylic acid and polyamine compound)

In the present embodiment, (mol number of -COO- groups included in the polycarboxylic acid in the gas barrier coating material) / (mol number of amino groups included in the polyamine compound in the gas barrier coating material) is preferably more than 100/22, more preferably 100/25 or more, even more preferably 100/29 or more, and particularly preferably 100/40 or more.

On the other hand, in the present embodiment, (mol number of -COO- groups included in the polycarboxylic acid in the gas barrier coating material)/(mol number of amino groups included in the polyamine compound in the gas barrier coating material) is preferably 100/99 or less, more preferably 100/86 or less, even more preferably 100/75 or less, and particularly preferably 100/70 or less.

In order to obtain the gas barrier polymer according to the present embodiment, it is important to adjust the blending ratio of the polycarboxylic acid and the polyamine compound in the gas barrier coating material such that (mol number of -COO- groups included in the polycarboxylic acid in the gas barrier coating material)/(mol number of amino groups included in the polyamine compound in the gas barrier coating material) is in the above ranges.

### (Polycarboxylic Acid)

The polycarboxylic acid according to the present embodiment has two or more carboxy groups in the molecule. Specifically, examples thereof include homopolymers of α,β-unsaturated carboxylic acid such as acrylic acid, methacrylic acid, itaconic acid, fumaric acid, crotonic acid, cinnamic acid, 3-hexenoic acid, and 3-hexenedioic acid, or copolymers thereof. In addition, the polycarboxylic acid may be a copolymer of the α,β-unsaturated carboxylic acid described above and esters such as ethyl ester, olefins such as ethylene, or the like.

Among these, a homopolymer of acrylic acid, methacrylic acid, itaconic acid, fumaric acid, crotonic acid, and cinnamic acid or a copolymer thereof is preferable, one type or two or more types of polymers selected from polyacrylic acid, polymethacrylic acid, and a copolymer of acrylic acid and methacrylic acid is more preferable, at least one type of polymer selected from polyacrylic acid and polymethacrylic acid is even more preferable, and at least one type of polymer selected from a homopolymer of acrylic acid or a homopolymer of methacrylic acid is particularly preferable.

Here, in the present embodiment, polyacrylic acid includes both homopolymers of acrylic acid and copolymers of acrylic acid and another monomer. In a case of a copolymer of acrylic acid and another monomer, the polyacrylic acid generally includes constituent units which are derived from acrylic acid at 90% by mass or more, preferably 95% by mass or more, and more preferably 99% by mass or more in 100% by mass of the polymer.

In addition, in the present embodiment, polymethacrylic acid includes both homopolymers of methacrylic acid and copolymers of methacrylic acid and another monomer. In a case of a copolymer of methacrylic acid and another monomer, the polymethacrylic acid generally includes constituent units which are derived from methacrylic acid at 90% by mass or more, preferably 95% by mass or more, and more preferably 99% by mass or more in 100% by mass of polymer.

The polycarboxylic acid according to the present embodiment is a polymer where carboxylic acid monomers are polymerized and the molecular weight of the polycarboxylic acid is preferably 500 to 2,000,000, and more preferably 1,500 to 1,000, 000, from the viewpoint of excellent balance of gas barrier property and handleability. The molecular weight of the polycarboxylic acid is more preferably 5,000 to 500,000, even more preferably 7,000 to 250,000, still more preferably 10,000 to 200,000, and particularly preferably 50,000 to 150,000.

Here, in the present embodiment, the molecular weight of the polycarboxylic acid is the polyethylene oxide conversion weight average molecular weight and is measurable using gel permeation chromatography (GPC).

### (Polyamine Compound)

The polyamine compound according to the present embodiment is a polymer having two or more amino groups in the main chain, side chain or terminal. Specific examples thereof include aliphatic polyamines such as polyallylamine, polyvinylamine, polyethyleneimine, and poly(trimethyleneimine); polyamides having amino groups on side chains such as polylysine and polyarginine; and the like. In addition, a polyamine where a portion of the amino group is modified may be used. From the viewpoint of obtaining favorable gas barrier properties, polyethylene imine is more preferable.

From the viewpoint of excellent balance of gas barrier property and handleability, the weight average molecular weight of the polyamine compound according to the present embodiment is preferably 50 to 5,000,000, more preferably 100 to 2,000,000, even more preferably 1,500 to 1,000,000, still more preferably 1,500 to 500,000, still more preferably 1,500 to 100,000, still more preferably 3,500 to 70,000, still more preferably 5,000 to 50,000, still more preferably 5,000 to 30,000, and particularly preferably 7,000 to 15,000.

Here, in the present embodiment, it is possible to measure the molecular weight of the polyamine compound using a boiling point increasing method or a viscosity method.

Next, description will be given of (2) a method for preparing a gas barrier coating material.

In order to obtain the gas barrier coating material in the present embodiment, it is important to tightly control each factor such as the selection of each material, the blending amount of each material, the solution concentration, and the mixing procedure of each material into the mixed solution.

For example, it is possible to manufacture a gas barrier coating material as follows.

First, the carboxy group of the polycarboxylic acid is completely or partially neutralized by adding a base to the polycarboxylic acid. Next, the polyamine compound is added to the polycarboxylic acid completely or partially neutralized with carboxy groups. Mixing the polycarboxylic acid and the polyamine compound according to such a procedure makes it possible to suppress the generation of aggregates of the polycarboxylic acid and the polyamine compound, and to obtain a uniform gas barrier coating material. This makes it possible to more effectively advance the dehydration condensation reaction between the -COO- group included in the polycarboxylic acid and the amino group included in the polyamine compound.

It is possible to suppress gelation from occurring by neutralizing the polycarboxylic acid with the base according to the present embodiment when mixing a polyamine compound and polycarboxylic acid. Accordingly, in the polycarboxylic acid, from the viewpoint of prevention of gelation, a base is preferably used for the partially neutralized product or completely neutralized product of a carboxy group. It is possible to obtain the neutralized product by partially or completely neutralizing the carboxy group of polycarboxylic acid with a base (that is, the carboxy group of the polycarboxylic acid is partially or completely made into carboxylate) . Due to this, it is possible to prevent gelation when adding a polyamine compound.

A partially neutralized product is prepared by adding a base to an aqueous solution of polycarboxylic acid and it is possible to set a desired neutralization degree by adjusting the ratio of the amounts of the polycarboxylic acid and the base. In the present embodiment, from the viewpoint of sufficiently suppressing gelation caused by the neutralization reaction with an amino group of a polyamine compound, the neutralization degree of the polycarboxylic acid by the base is preferably 30 to 100 equivalent%, 40 to 100 equivalent%, and more preferably 50 to 100 equivalent%.

It is possible to use an arbitrary water-soluble base as a base. It is possible to use either or both of a volatile base and a non-volatile base as a water-soluble base; however, a volatile base which is easily removed when drying or curing is preferable from the viewpoint of suppressing a deterioration in the gas barrier property due to a residual free base.

Examples of volatile bases include ammonia, morpholine, alkylamine, 2-dimethyl amino ethanol, N-methyl monopholine, ethylene diamine, and tertiary amines such as triethyl amine, an aqueous solution thereof or a mixture thereof. From the viewpoint of obtaining a favorable gas barrier property, an ammonia aqueous solution is preferable.

Examples of non-volatile bases include sodium hydroxide, lithium hydroxide, and potassium hydroxide, an aqueous solution thereof, or a mixture thereof.

In addition, from the viewpoint of improving coatability, the solid content concentration of the gas barrier coating material is preferably set to 0.5 to 15% by mass, and more preferably 1 to 10% by mass.

In addition, for the gas barrier coating material, it is preferable to further add a surfactant from the viewpoint of suppressing the occurrence of cissing during coating. The addition amount of the surfactant is preferably 0.01 to 3% by mass, and more preferably 0.01 to 1% by mass, based on 100% by mass of the total solid content of the gas barrier coating material.

Examples of the surfactant according to the present embodiment include an anionic surfactant, a non-ionic surfactant, a cationic surfactant, an amphoteric surfactant and the like, and, from the viewpoint of obtaining favorable coatability, non-ionic surfactants are preferable, and polyoxyethylene alkyl ethers are more preferable.

Examples of the non-ionic surfactants include polyoxyalkylene alkylaryl ethers, polyoxyalkylene alkyl ethers, polyoxyalkylene fatty acid esters, sorbitan fatty acid esters, silicone surfactants, acetylene alcohol surfactants, fluorine-containing surfactants, and the like.

Examples of the polyoxyalkylene alkyl aryl ethers include polyoxyethylene nonyl phenyl ether, polyoxyethylene octyl phenyl ether, polyoxyethylene dodecyl phenyl ether, and the like.

Examples of the polyoxyalkylene alkyl ethers include polyoxyethylene alkyl ethers such as polyoxyethylene oleyl ether and polyoxyethylene lauryl ether.

Examples of the polyoxyalkylene fatty acid esters include polyoxyethylene oleic acid esters, polyoxyethylene lauric acid esters, polyoxyethylene distearic acid esters, and the like.

Examples of sorbitan fatty acid esters include sorbitan laurate, sorbitan monostearate, sorbitan monooleate, sorbitan sesquioleate, polyoxyethylene monooleate, polyoxyethylene stearate, and the like.

Examples of silicone surfactants include dimethylpolysiloxane and the like.

Examples of the acetylene alcohol surfactant include 2,4,7,9-tetramethyl-5-decyne-4,7-diol,
3,6-dimethyl-4-octyne-3,6-diol, 3,5-dimethyl-1-hexyne-3-ol, and the like.

Examples of fluorine-containing surfactant include fluorine alkyl ester and the like.

The gas barrier coating material according to the present embodiment may include other additives within the range not impairing the object of the present invention. For example, various types of additive agents such as a lubricant, a slipping agent, an anti-blocking agent, an anti-static agent, an anti-fogging agent, a pigment, a dye, an inorganic or organic filler, and a polyvalent metal compound may be added.

Next, description will be given of (3) the method, temperature, and time of the heat treatment of the gas barrier coating material.

In order to obtain the gas barrier polymer according to the present embodiment, it is necessary to adopt the method, temperature, and time of the heat treatment of the gas barrier coating material which are able to effectively advance the dehydration condensation reaction between the -COO- group contained in the polycarboxylic acid and the amino group contained in the polyamine compound. Specifically, it is important to tightly control and combine each factor such as the coating amount of the gas barrier coating material, the type of apparatus used for the heat treatment, the heat treatment temperature, and the heat treatment time. In order to manufacture the gas barrier polymer according to the present embodiment, for example, the gas barrier coating material according to the present embodiment is coated on a base material such that the wet thickness is 0.05 to 300 µm, and heated and dried using a known apparatus used for heat treatment.

The method of drying and heat treatment is not particularly limited as long as it is possible to achieve the object of the present invention and any method capable of curing the gas barrier coating material and heating the cured gas barrier coating material may be used. Examples thereof include heating by convection heat transfer such as ovens or dryers, heating by conductive heat transfer such as heating rolls, heating by radiation heat transfer using electromagnetic waves such as infrared, far infrared, and near infrared heaters, and heating by internal heat generation such as microwaves. As an apparatus used for drying and heat treatment, an apparatus capable of performing both drying and heat treatments is preferable from the viewpoint of production efficiency. In particular, from the viewpoint of being usable for various purposes such as drying, heating, annealing and the like, it is preferable to use a hot air oven, and from the viewpoint of excellent thermal conductivity efficiency to the film, it is preferable to use a heating roll. Further, methods used for the drying and heat treatments may be appropriately combined. A hot air oven and a heating roll may be used in combination, for example, if the gas barrier coating material is dried in a hot air oven and then subjected to a heat treatment with a heating roll, the heat treatment step duration becomes short, which is preferable from the viewpoint of production efficiency. In addition, it is preferable to perform the drying and heat treatment only with a hot air oven. In the case of drying the gas barrier coating material using a hot air oven, it is desirable to perform heat treatment under conditions where the heat treatment temperature is 160 to 250°C and the heat treatment time is 1 second to 30 minutes, preferably where the heat treatment temperature is 180 to 240°C and the heat treatment time is 5 seconds to 20 minutes, more preferably where the heat treatment temperature is 200°C to 230°C and the heat treatment time is 10 seconds to 15 minutes, and even more preferably where the heat treatment temperature is 200°C to 220°C and the heat treatment time is 15 seconds to 10 minutes. Furthermore, as described above, it is possible to perform the heat treatment in a short time by using a heating roll therewith. Note that, from the viewpoint of effectively advancing the dehydration condensation reaction between the -COO- group included in the polycarboxylic acid and the amino group included in the polyamine compound, it is important to adjust the heat treatment temperature and the heat treatment time according to the wet thickness of the gas barrier coating material.

The method of coating the gas barrier coating material according to the present embodiment on a base material is not particularly limited, and it is possible to use an ordinary method. Examples thereof include coating methods using various known coating devices such as a Mayer bar coater, an air knife coater, a direct gravure coater, a gravure offset, arc gravure coaters, gravure coaters such as gravure reverse and jet nozzle system coaters, reverse coaters such as a top feed reverse coater, a bottom feed reverse coater, and a nozzle feed reverse coater, a five-roll coater, a lip coater, a bar coater, a bar reverse coater, a die coater, and the like.

The coating amount (wet thickness) is preferably 0.05 to 300 µm, more preferably 1 to 200 µm, and even more preferably 1 to 100 µm.

When the coating amount is the above upper limit value or less, it is possible to suppress curling of the obtained gas barrier laminate and gas barrier film. In addition, when the coating amount is the above upper limit value or less, it is possible to more effectively advance the dehydration condensation reaction between the -COO- group included in the polycarboxylic acid and the amino group included in the polyamine compound.

In addition, when the coating amount is the above lower limit value or more, it is possible to further improve the barrier performance of the obtained gas barrier laminate and gas barrier film.

The thickness of the layer including the gas barrier polymer after drying/curing (the gas barrier layer or the gas barrier film in the gas barrier laminate described below) is preferably 0.01 to 15 µm, more preferably 0.05 to 5 µm, and even more preferably 0.1 to 1 µm.

For the drying and heat treatment, a heat treatment may be carried out after drying, or drying and heat treatments may be carried out at the same time. The method of the drying and heat treatment is not particularly limited as long as it is a method able to achieve the object of the present invention; however, a method using an oven is preferable from the viewpoint of being usable for various purposes such as drying, heating, and annealing, and a method using a heating roll is particularly preferable from the viewpoint that the heat transfer efficiency to the film for the purpose of heating is excellent.

It is possible to obtain the gas barrier polymer according to the present embodiment for the first time by a manufacturing method which tightly controls various factors relating to the three conditions described above.

### <Gas Barrier Film>

The gas barrier film according to the present embodiment includes the gas barrier polymer according to the present embodiment.

The gas barrier film according to the present embodiment is formed from the gas barrier coating material described above and is obtained by coating the gas barrier coating material on the base material or the inorganic material layer and then performing drying and heat treatments and curing the gas barrier coating material. Here, since the method for manufacturing the gas barrier film according to the present embodiment is based on the above-described method for manufacturing a gas barrier polymer, description thereof will not be repeated.

The oxygen permeability of the gas barrier film according to the present embodiment at 20°C and 90% RH at a thickness of 1 µm is preferably 30 ml/(m²·day·MPa) or less, more preferably 20 ml/ (m²·day·MPa) or less, and even more preferably 10 ml/ (m²·day·MPa) or less. Due to this, it is possible to obtain a favorable gas barrier property.

Note that, the oxygen permeability is measured according to JIS K 7126 at a temperature of 20°C and a humidity of 90% RH.

### <Gas Barrier Laminate>

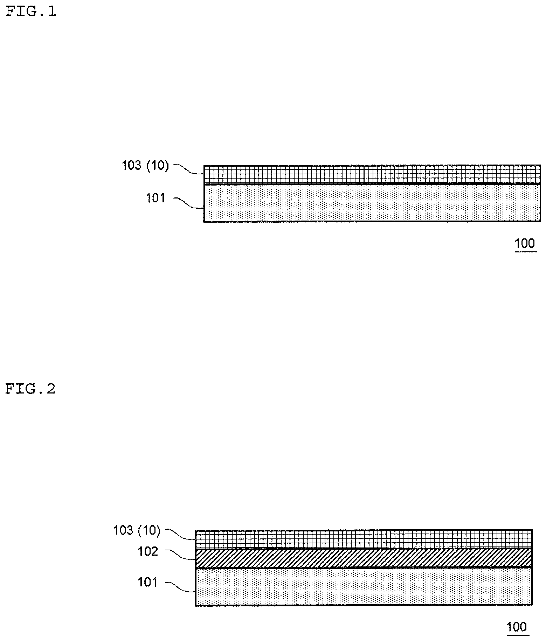

FIGS. 1 and 2 are cross-sectional views schematically showing an example of a structure of a gas barrier laminate 100 according to an embodiment of the present invention.

The gas barrier laminate 100 includes a base material layer 101, and a gas barrier layer 103 (gas barrier film 10) provided on at least one surface of the base material layer 101 and including the gas barrier polymer according to the present embodiment.

In addition, as shown in FIG. 2, in the gas barrier laminate 100, the inorganic material layer 102 may be further laminated between the base material layer 101 and the gas barrier layer 103 (gas barrier film 10). Due to this, it is possible to further improve the barrier performances such as the oxygen barrier property and water vapor barrier property.

In addition, in the gas barrier laminate 100, an undercoat layer may be further laminated on the base material layer 101 from the viewpoint of improving adhesion between the base material layer 101 and the gas barrier layer 103 or the inorganic material layer 102.

### (Inorganic Material Layer)

Examples of the inorganic material forming the inorganic material layer 102 of the present embodiment include metals, metal oxides, metal nitrides, metal fluorides, metal oxynitrides, and the like which are able to form a thin film having barrier properties.

Examples of inorganic materials forming the inorganic material layer 102 include one type or two or more types selected from periodic table 2A elements such as beryllium, magnesium, calcium, strontium, and barium, periodic table transition elements such as titanium, zirconium, ruthenium, hafnium, and tantalum; periodic table 2B elements such as zinc; periodic table 3A elements such as aluminum, gallium, indium, thallium; periodic table 4A elements such as silicon, germanium, and tin; periodic table 6A elements such as selenium and tellurium, and the like, and oxides, nitrides fluorides, oxynitrides, and the like thereof.

Note that, in the present embodiment, the group name of the periodic table is indicated by the old CAS formula.

Furthermore, among the inorganic materials described above, one type or two or more types of inorganic materials selected from the group consisting of silicon oxide, aluminum oxide, and aluminum are preferable, due to being excellent in the balance of barrier properties, cost, and the like.

Note that, silicon oxide may contain silicon monoxide and silicon suboxide in addition to silicon dioxide.

The inorganic material layer 102 is formed of the inorganic material described above. The inorganic material layer 102 may be formed of a single inorganic material layer or a plurality of inorganic material layers. In addition, in a case where the inorganic material layer 102 is formed of a plurality of inorganic material layers, the inorganic material layer 102 may be formed of the same type of inorganic material layer or may be formed of different types of inorganic material layers.

The thickness of the inorganic material layer 102 is usually equal to or more than 1 nm and equal to or less than 1000 nm, and preferably equal to or more than 1 nm and equal to or less than 500 nm, from the viewpoint of balance between the barrier property, adhesion, handleability, and the like.

In the present embodiment, it is possible to determine the thickness of the inorganic material layer 102 from observation images taken by a transmission electron microscope or a scanning electron microscope.

The method of forming the inorganic material layer 102 is not particularly limited, and it is possible to form the inorganic material layer 102 on one side or both sides of the base material layer 101 using, for example, a vacuum deposition method, an ion plating method, a sputtering method, a chemical vapor phase growth method, a physical vapor deposition method, a chemical vapor deposition method (CVD), a plasma CVD method, a sol-gel method, or the like. Among the above, film formation under reduced pressure such as a sputtering method, an ion plating method, a chemical vapor deposition method (CVD), a physical vapor deposition method (PVD), a plasma CVD, or the like is desirable. Due to this, it is expected quickly reacting the chemically active molecular species containing silicon such as silicon nitride or silicon oxynitride will make it possible to improve the smoothness of the surface of the inorganic material layer 102 and to reduce the number of pores.

In order to rapidly perform these bonding reactions, it is desirable that the inorganic atoms and compounds are chemically active molecular species or atomic species.

### (Base Material Layer)

The base material layer 101 of the present embodiment is formed of, for example, an organic material such as a thermosetting resin, a thermoplastic resin, or paper, and includes at least one selected from a thermosetting resin and a thermoplastic resin is preferable.

Examples of thermosetting resins include known thermosetting resins such as an epoxy resin, an unsaturated polyester resin, a phenol resin, a urea melamine resin, a polyurethane resin, a silicone resin, and polyimide.

Examples of thermoplastic resins include thermoplastic resins known in the art such as polyolefin (polyethylene, polypropylene, poly(4-methyl-1-pentene), poly(1-butene), and the like), polyester (polyethylene terephthalate, polybutylene terephthalate, polyethylene naphthalate, and the like), polyamide (nylon-6, nylon-66, polymetaxylene adipamide, and the like), polyvinyl chloride, polyimide, ethylene vinyl acetate copolymers or saponified products thereof, polyvinyl alcohol, polyacrylonitrile, polycarbonate, polystyrene, ionomers, fluorine resins, mixtures thereof, and the like.

Among the above, from the viewpoint of improving transparency, one type or two or more types selected from polypropylene, polyethylene terephthalate, polybutylene terephthalate, polyethylene naphthalate, polyamide, and polyimide are preferable, and one type or two or more types selected from polyethylene terephthalate and polyethylene naphthalate is more preferable.

In addition, the base material layer 101 formed of a thermoplastic resin may be a single layer or two or more types of layers depending on the use of the gas barrier laminate 100.

In addition, the film formed from the thermosetting resin and the thermoplastic resin may be stretched in at least one direction, preferably a biaxial direction, to obtain a base material layer.

From the viewpoint of excellent transparency, rigidity and heat resistance, the base material layer 101 of the present embodiment is preferably a biaxially stretched film formed of one type or two or more types of thermoplastic resin selected from polypropylene, polyethylene terephthalate, polybutylene terephthalate, polyethylene naphthalate, polyamide, and polyimide, and more preferably a biaxially stretched film formed of one type or two or more types of thermoplastic resins selected from polyethylene terephthalate and polyethylene naphthalate.

In addition, the surface of the base material layer 101 may be coated with polyvinylidene chloride, polyvinyl alcohol, an ethylene and vinyl alcohol copolymer, an acryl resin, a urethane-based resin, and the like.

Furthermore, the base material layer 101 may be subjected to a surface treatment in order to improve the adhesion with the gas barrier layer 103 (gas barrier film 10). In detail, a surface activation treatment such as a corona treatment, a flame treatment, a plasma treatment, a primer coat treatment, or the like may be performed.

The thickness of the base material layer 101 is preferably 1 to 1000 µm, more preferably 1 to 500 µm, and even more preferably 1 to 300 µm, from the viewpoint of obtaining favorable film properties.

The shape of the base material layer 101 is not particularly limited, but examples thereof include a sheet or film shape, and shapes such as a tray, a cup, and a hollow body.

### (Undercoat Layer)

In the gas barrier laminate 100, from the viewpoint of improving the adhesion between the base material layer 101 and the gas barrier layer 103 or the inorganic material layer 102, an undercoat layer, preferably an undercoat layer of an epoxy (meth)acrylate compound or a urethane (meth)acrylate compound, is preferably formed on the surface of the base material layer 101.

The undercoat layer is preferably a layer obtained by curing at least one type selected from an epoxy (meth) acrylate compound and a urethane (meth)acrylate compound.

Examples of the epoxy (meth) acrylate compound include compounds obtained by reacting epoxy compounds such as bisphenol A type epoxy compounds, bisphenol F type epoxy compounds, bisphenol S type epoxy compounds, phenol novolak type epoxy compounds, cresol novolak type epoxy compounds, and aliphatic epoxy compounds, with acrylic acid or methacrylic acid, and examples thereof include an acid-modified epoxy (meth)acrylate obtained by reacting the epoxy compound above with a carboxylic acid or an anhydride thereof. These epoxy (meth) acrylate-based compounds are coated on the surface of the base material layer together with a photopolymerization initiator and, if necessary, another photopolymerization initiator or a diluent formed of a thermally reactive monomer, after which an undercoat layer is formed by a cross-linking reaction through irradiation with ultraviolet light or the like.

Examples of the urethane (meth) acrylate-based compound include compounds obtained by acrylating an oligomer (also referred to below as a polyurethane-based oligomer) formed of a polyol compound and a polyisocyanate compound, and the like.

It is possible to obtain the polyurethane-based oligomer from a condensation product of a polyisocyanate compound and a polyol compound. Specific examples of the polyisocyanate compound include methylene·bis (p-phenylene diisocyanate), an adduct of hexamethylene diisocyanate·hexanetriol, hexamethylene diisocyanate, tolylene diisocyanate, an adduct of tolylene diisocyanate trimethylolpropane, 1,5-naphthylene diisocyanate, thiopropyl diisocyanate, ethylbenzene-2,4-diisocyanate, 2,4-tolylene diisocyanate dimer, hydrogenated xylylene diisocyanate, tris (4-phenylisocyanate) thiophosphate, and the like, in addition, specific polyol compounds include polyether polyols such as polyoxytetramethylene glycol, polyester polyols such as polyadipate polyols and polycarbonate polyol, copolymers of acrylate esters and hydroxyethyl methacrylate, and the like. Examples of the monomer forming the acrylate include monomers such as methyl (meth) acrylate, ethyl (meth) acrylate, butyl (meth)acrylate, 2-ethylhexyl (meth)acrylate, methoxyethyl (meth)acrylate, butoxyethyl (meth)acrylate, phenyl (meth)acrylate, and the like.

These epoxy (meth)acrylate-based compounds and urethane (meth) acrylate-based compounds are used in combination, if necessary. In addition, examples of methods of polymerizing the above include various known methods, specifically, methods of irradiation with energy rays including ionizing radiation, heating, or the like.

In the case where the undercoat layer is formed by curing with ultraviolet rays, acetophenones, benzophenones, Michler's benzoyl benzoate, α-amyloxime ester, thioxanthones, or the like are preferably used as a photopolymerization initiator and, in addition, n-butylamine, triethylamine, tri n-butylphosphine, and the like are preferably mixed and used as a photosensitizer. In addition, in the present embodiment, an epoxy (meth) acrylate compound and a urethane (meth)acrylate compound may also be used in combination.

In addition, these epoxy (meth) acrylate compounds and urethane (meth)acrylate compounds are diluted with (meth)acrylic monomers. Examples of such (meth)acrylic monomers include methyl (meth)acrylate, ethyl (meth)acrylate, butyl (meth)acrylate, 2-ethylhexyl (meth)acrylate, methoxyethyl (meth)acrylate, butoxyethyl (meth)acrylate, phenyl (meth)acrylate, and, as multi-functional monomers, trimethylolpropane tri(meth)acrylate, hexanediol (meth)acrylate, tripropylene glycol di(meth)acrylate, diethylene glycol di(meth)acrylate, pentaerythritol tri(meth)acrylate, dipentaerythritol hexa (meth)acrylate, 1,6-hexanediol di(meth)acrylate, neopentyl glycol di(meth)acrylate, and the like.

Among the above, in a case where the urethane (meth)acrylate compound is used as the undercoat layer, the oxygen gas barrier property of the obtained gas barrier laminate 100 is further improved.

The thickness of the undercoat layer of the present embodiment is usually in the range of 0.01 to 100 g/m², preferably 0.05 to 50 g/m², as the coating amount.

Further, an adhesive layer may be provided between the base material layer 101 and the gas barrier layer 103. Note that, the undercoat layer is excluded from the adhesive layer.

The adhesive layer is a layer including any known adhesive agent. Examples of the adhesive include laminated adhesives formed of an organic titanium-based resin, a polyethylene imine-based resin, a urethane-based resin, an epoxy-based resin, an acrylic-based resin, a polyester-based resin, an oxazoline group containing resin, a modified silicone resin, an alkyl titanate, a polyester type polybutadiene, and the like, or a one-component type or two-component type polyols and polyvalent isocyanates, aqueous urethane, ionomers, and the like. Alternatively, an aqueous adhesive mainly composed of an acrylic-based resin, a vinyl acetate-based resin, a urethane-based resin, a polyester resin, or the like may be used.

In addition, other additives such as a curing agent and a silane coupling agent may be added to the adhesive depending on the application of the gas barrier laminate. In a case where the gas barrier laminate is used for hot water treatment such as retorting, from the viewpoint of heat resistance and water resistance, a dry lamination adhesive represented by a polyurethane adhesive is preferable, and a solvent type two-component curing type polyurethane adhesive is more preferable.

The warpage of the gas barrier laminate 100 at 23°C is preferably 5 mm or less, and more preferably 3 mm or less. Here, for the warpage of the gas barrier laminate 100, when the gas barrier laminate 100 cut out into a 5 cm square is placed on a platen, the maximum interval occurring between the gas barrier laminate 100 and the platen is defined as the warpage and is measured with a gap gauge.

The gas barrier laminate 100 having such a small warpage is excellent in handleability. Further, when laminating the gas barrier laminate 100 on another layer, it is possible to suppress positional deviation from other layers.

The gas barrier laminate 100 and the gas barrier film of the present embodiment are excellent in gas barrier performance and are able to be suitably used as packaging materials, food packaging materials for contents requiring particularly high gas barrier properties, and various packaging materials for medical applications, industrial applications, common miscellaneous goods applications, and the like.

In addition, the gas barrier laminate 100 and the gas barrier film of the present embodiment are able to be suitably used as, for example, a film for vacuum heat insulation, which is required to have high barrier performance; a sealing film for sealing an electroluminescence element, a solar cell, or the like; and the like.

### <Method for Manufacturing Gas Barrier Laminate>

Since the method for manufacturing the gas barrier laminate according to the present embodiment is based on the above-described method for manufacturing a gas barrier polymer, description thereof will not be repeated.

Although the embodiments of the present invention were described with reference to the drawings, these are examples of the present invention, and it is also possible to adopt various configurations other than those described above.

### [Examples]

### <Preparation of Solution (Z)>

Purified water was added to a mixture of ammonium polyacrylate (manufactured by Toagosei Co., Ltd., trade name: Aron A-30, 30% aqueous solution, molecular weight: 100,000) to obtain a 10% solution of ammonium polyacrylate aqueous solution.

### <Preparation of Solution (Y)>

Purified water was added to polyethyleneimine (manufactured by Wako Pure Chemical Industries, Ltd., trade name: P-70, average molecular weight: approximately 70,000) to obtain a 10% solution of polyethyleneimine aqueous solution.

### <Preparation of Solution (X)>

Purified water was added to polyethyleneimine (manufactured by Wako Pure Chemical Industries, Ltd., trade name: polyethyleneimine, average molecular weight: approximately 10,000) to obtain a 10% solution of polyethyleneimine aqueous solution.

### [Comparative Example 1]

A biaxially stretched polyethylene terephthalate film (PET 12 manufactured by Unitika Ltd.) having a thickness of 12 µm was set as a base material and an aluminum oxide film having a thickness of 8 nm was formed by heating and evaporating the aluminum using a high-frequency induction heating method on the corona-treated surface thereof, and performing vapor deposition while introducing oxygen. Due to this, an aluminum oxide vapor-deposited PET film was obtained.

The water vapor permeability of this aluminum oxide-deposited PET film was 1.5 g/m²·day.

### [Example 1]

87.5 g of the ammonium polyacrylate aqueous solution (Z) and 12.5 g of the polyethyleneimine aqueous solution (Y) described above were mixed and stirred to prepare a mixed solution.

Furthermore, purified water was added such that the solid content concentration of the mixed solution described above became 2.5% by mass and stirred until the solution became homogeneous, and then a non-ionic surfactant (polyoxyethylene lauryl ether, manufactured by Kao Corporation, trade name: EMULGEN 120) was mixed therein so as to be 0.3% by mass with respect to the solid content of the mixed solution to prepare a solution (V).

The obtained solution (V) was coated on a corona-treated surface of a biaxially stretched polyethylene terephthalate film (PET 12 manufactured by Unitika Ltd.) having a thickness of 12 µm using a Mayer bar such that the coating amount after drying was 0.3 µm, the result was dried under conditions of a temperature of 100°C for a time of 30 seconds using a hot air dryer and further subjected to a heat treatment at a temperature of 215°C for 10 minutes in a hot air dryer to obtain a gas barrier laminate film.

The obtained gas barrier laminate film was evaluated as follows and the results are shown in Table 1.

### [Example 2]

The same procedure as for Example 1 was followed except that 83 g of the ammonium polyacrylate aqueous solution (Z) and 17 g of the polyethyleneimine aqueous solution (Y) were used.

### [Example 3]

The same procedure as for Example 2 was followed except that the polyethylenimine aqueous solution (Y) was replaced with the polyethyleneimine aqueous solution (X).

### [Example 4]

The same procedure as for Example 3 was followed except that 76.1 g of the ammonium polyacrylate aqueous solution (Z) and 23.9 g of the polyethyleneimine aqueous solution (X) were used.

### [Example 5]

The same procedure as for Example 3 was followed except that 73.4 g of the ammonium polyacrylate aqueous solution (Z) and 26.6 g of the polyethyleneimine aqueous solution (X) were used.

### [Example 6]

The same procedure as for Example 3 was followed except that 70.9 g of the ammonium polyacrylate aqueous solution (Z) and 29.1 g of the polyethyleneimine aqueous solution (X) were used.

### [Example 7]

The same procedure as for Example 3 was followed except that the vapor deposition surface of the aluminum oxide vapor-deposited PET film obtained in Comparative Example 1 was coated with an applicator.

The water vapor permeability was 0.33 g/m²·day.

### [Example 8]

The same procedure as for Example 4 was followed except that the vapor deposition surface of the aluminum oxide vapor deposited PET film obtained in Comparative Example 1 was coated with an applicator. The water vapor permeability was 0.41 g/m²·day. The oxygen permeability after pulling 5% was 0.3 ml/(m²·day·MPa). That is, oxygen permeability did not deteriorate even when a tensile test was performed.

### [Comparative Example 2]

The same procedure as for Example 3 was followed except that 90.4 g of the ammonium polyacrylate aqueous solution (Z) and 9.6 g of the polyethyleneimine aqueous solution (X) were used.

### [Comparative Example 3]

Next, 65.3 g of the ammonium polyacrylate aqueous solution (Z) and 34.7 g of the polyethyleneimine aqueous solution (X) were mixed and stirred to prepare a mixed solution.

Further, purified water was added such that the solid content concentration of the above mixed solution became 2.5% by mass and stirred until the solution became homogeneous, and then a non-ionic surfactant (polyoxyethylene lauryl ether, manufactured by Kao Corporation, trade name: EMULGEN 120) was mixed therein so as to be 0.3% by mass with respect to the solid content of the mixed solution. However, the obtained solution became cloudy and could not be coated.

### [Comparative Example 4]

The same procedure as for Example 3 was followed except that the heat treatment at a temperature of 215°C for 10 minutes was set to 1 minute and the thickness of the gas barrier coating material was 1.2 µm.

### [Comparative Example 5]

The same procedure as for Example 4 was followed except that the heat treatment at a temperature of 215°C for 10 minutes was set to 1 minute and the thickness of the gas barrier coating material was 1.2 µm.

### <Evaluation Method>

(1) An ester adhesive (9 parts by mass of polyurethane adhesive (manufactured by Mitsui Chemicals, Inc., trade name: Takelac A 525 S), 1 part by mass of an isocyanate curing agent (trade name: Takenate A50, manufactured by Mitsui Chemicals, Inc.), and 7.5 parts by mass of ethyl acetate) was coated and dried on one side of an unstretched polypropylene film (manufactured by Mitsui Chemicals, Tocello Inc., trade name: RXC-22) having a thickness of 70 µm, and then bonded (dry lamination) with the barrier surface of the gas barrier laminate film obtained in the Examples and Comparative Examples to obtain a multilayer film.

### (2) Retort Treatment

The multilayer film obtained above was folded back such that the unstretched polypropylene film became the inner surface and the two sides were heat sealed to form a bag shape, then 70 cc of water was added thereto as the content and the other side was heat sealed to form a bag, which was subjected to a retort treatment under conditions of 130°C for 30 minutes in a high temperature and high pressure retort sterilizer. After the retort treatment, the water content was drained to obtain a multilayer film after the retort treatment.

### (3) Oxygen Permeability [ml/(m²·day·MPa)]

The multilayer film obtained by the method described above was measured using OX-TRAN 2/21 manufactured by Mocon Inc. in accordance with JIS K 7126 at a temperature of 20°C and a humidity of 90% RH.

### (4) IR Area Ratio

Measurement of the infrared absorption spectrum (infrared total reflection measurement: ATR method) was carried out using an IRT-5200 apparatus manufactured by JASCO International Co., Ltd. , mounted with PKM-GE-S (Germanium) crystals, under conditions of an incident angle of 45°, room temperature, a resolution of 4 cm⁻¹, and an integration number of 100 times. The obtained absorption spectrum was analyzed using the method described above, and the total peak areas A to D were calculated. Then, area ratios B/A, C/A, and D/A were determined from the total peak areas A to D.

### (5) Water Vapor Permeability [g/m²·day]

An ester adhesive (12 parts by mass of polyester adhesive (trade name: Takelac A310 manufactured by Mitsui Chemical Polyurethane Co., Ltd.), 1 part by mass of an isocyanate curing agent (trade name: Takenate A3, manufactured by Mitsui Chemicals, Inc.), and 7 parts by mass of ethyl acetate) was coated and dried on one side of an unstretched polypropylene film (manufactured by Mitsui Chemicals, Tocello Inc., trade name: T.U.X. FCS) having a thickness of 50 µm, and then bonded (dry lamination) with the barrier surface of the gas barrier film and gas barrier laminate film obtained in the Examples and Comparative Examples to obtain a multilayer film. The obtained multilayer film was overlapped such that the unstretched polypropylene film was on the inner surface, the gas barrier laminate film was folded back, the three sides were heat sealed and formed into a bag shape, and then calcium chloride was added as the content and the other side was heat sealed to form a bag with a surface area of 0.01 m², the bag was left to stand for 300 hours under conditions of 40°C and 90% RH, and the water vapor permeability was measured by the difference in weight.

### (6) Oxygen Permeability After 5% Pulling

After the gas barrier laminate film was sampled to have a width of 110 mm and a length of 300 mm and then clamped at both ends with a clip having a width of 100 mm to make the length between the clips 200 mm, the gas barrier laminate film was pulled at a pulling rate of 50 (mm/min) to 210 mm, and a barrier laminate film after 5% pulling was obtained. The oxygen permeability after 5% pulling was measured by the oxygen permeability measurement method described above.

### (7) Warpage of Gas Barrier Laminate Film

The warpage of the gas barrier laminate film at 23°C was determined by cutting out a gas barrier laminate film into a 5 cm square and placing the gas barrier laminate film on a platen with the base material side down with all sides pressed down, and then measuring the maximum interval occurring between the gas barrier laminate film and the platen with a gap gauge. A sample having a warpage of 5 mm or less was evaluated as "○" and a sample having a warpage exceeding 5 mm was evaluated as "X".

### (8) Appearance Evaluation of Gas Barrier Laminate Film

The appearance of the gas barrier laminate film was visually evaluated according to the following criteria.
○: No coloring or no spots are observed on the surface
X: Coloring or spots are observed on the surface

### (9) Appearance Evaluation of Coating Material (Mixed Solution)

The appearance of the coating material (mixed solution) was visually evaluated according to the following criteria.
○: Homogeneous solution
X: White turbidity and painting not possible

**Table 1**

| | Base material layer | IR area ratio B/A [-] | IR area ratio C/A [-] | IR area ratio [-] D/A [-] | Mol number of -COO- groups included in polycarboxylic acid/Mol number of amino groups included in polyamine compound | Polyethylene imine molecular weight | Appearance of liquid | Gas barrier layer film thickness [µm] | Heat treatment conditions | | Oxygen permeability [ml/m²·day·MPa] | | Warping | Appearance |
|---|---|---|---|---|---|---|---|---|---|---|---|---|---|---|
| | | | | | | | | | Temperature [°C] | Time [min] | Before retort treatment | After retort treatment | | |
| Example 1 | PET | 0.402 | 0.419 | 0.158 | 100/29.5 | 70,000 | ○ | 0.3 | 215 | 10 | 6.1 | 143.9 | ○ | ○ |
| Example 2 | PET | 0.423 | 0.294 | 0.264 | 100/42.5 | 70,000 | ○ | 0.3 | 215 | 10 | 3.4 | 46.2 | ○ | ○ |
| Example 3 | PET | 0.444 | 0.389 | 0.167 | 100/42.5 | 10,000 | ○ | 0.3 | 215 | 10 | 2.8 | 40.9 | ○ | ○ |
| Example 4 | PET | 0.490 | 0.277 | 0.233 | 100/65 | 10,000 | ○ | 0.3 | 215 | 10 | 9.9 | 34.6 | ○ | ○ |
| Example 5 | PET | 0.448 | 0.218 | 0.334 | 100/75 | 10,000 | ○ | 0.3 | 215 | 10 | 28.7 | 67.1 | ○ | ○ |
| Example 6 | PET | 0.423 | 0.176 | 0.402 | 100/85 | 10,000 | ○ | 0.3 | 215 | 10 | 55.3 | 117.1 | ○ | ○ |
| Example 7 | Aluminum oxide deposited PET | 0.444 | 0.389 | 0.167 | 100/42.5 | 10,000 | ○ | 0.3 | 215 | 10 | 0.3 | 0.6 | ○ | ○ |
| Example 8 | Aluminum oxide deposited PET | 0.490 | 0.277 | 0.233 | 100/65 | 10,000 | ○ | 0.3 | 215 | 10 | 0.5 | 0.8 | ○ | ○ |
| Comparative Example 1 | Aluminum oxide deposited PET | - | - | - | - | - | - | - | - | - | 15.0 | 27.0 | ○ | ○ |
| Comparative Example 2 | PET | 0.366 | 0.549 | 0.085 | 100/22 | 10,000 | ○ | 0.3 | 215 | 10 | 41.8 | 638.3 | ○ | ○ |
| Comparative Example 3 | PET | - | - | - | 100/120 | 10,000 | X | - | - | - | - | - | - | - |
| Comparative Example 4 | PET | 0.297 | 0.394 | 0.309 | 100/42.5 | 10,000 | ○ | 1.2 | 215 | 1 | 107.8 | - | X | ○ |
| Comparative Example 5 | PET | 0.270 | 0.296 | 0.433 | 100/65 | 10,000 | ○ | 1.2 | 215 | 1 | 318.4 | - | X | ○ |

The gas barrier laminate film obtained in the examples was excellent in the balance between appearance, dimensional stability, and productivity, while being excellent in gas barrier performance under both conditions of high humidity and after a boil and retort treatment.

## Claims

1. A gas barrier polymer formed by heating a mixture including a polycarboxylic acid and a polyamine compound,
wherein, in an infrared absorption spectrum of the gas barrier polymer, when a total peak area in a range of an absorption band of equal to or more than 1493 cm⁻¹ and equal to or less than 1780 cm⁻¹ is A, and a total peak area in a range of an absorption band of equal to or more than 1598 cm⁻¹
and equal to or less than 1690 cm⁻¹ is B, an area ratio of an amide bond indicated by B/A is 0.370 or more, and
wherein, in the infrared absorption spectrum, when a total peak area in a range of an absorption band of equal to or more than 1493 cm⁻¹ and equal to or less than 1598 cm⁻¹ is D, an area ratio of a carboxylate indicated by D/A is 0.450 or less.

2. The gas barrier polymer according to claim 1,
wherein, in the infrared absorption spectrum, when a total peak area in a range of an absorption band of equal to or more than 1690 cm⁻¹ and equal to or less than 1780 cm⁻¹ is C, an area ratio of a carboxylic acid indicated by C/A is 0.500 or less.

3. The gas barrier polymer according to claim 1 or 2,
wherein (mol number of -COO- groups included in the polycarboxylic acid in the mixture)/(mol number of amino groups included in the polyamine compound in the mixture)=more than 100/22 and equal to or less than 100/99.

4. The gas barrier polymer according to any one of claims 1 to 3,
wherein the polycarboxylic acid includes one type or two or more types of polymers selected from polyacrylic acid, polymethacrylic acid, and copolymers of acrylic acid and methacrylic acid.

5. A gas barrier film comprising:
the gas barrier polymer according to any one of claims 1 to 4.

6. A gas barrier laminate comprising:
a base material layer; and
a gas barrier layer provided on at least one surface of the base material layer and including the gas barrier polymer according to any one of claims 1 to 4.

7. The gas barrier laminate according to claim 6, further comprising:
an inorganic material layer between the base material layer and the gas barrier layer.

8. The gas barrier laminate according to claim 7,
wherein the inorganic material layer is formed of one type or two or more types of inorganic materials selected from the group consisting of silicon oxide, aluminum oxide, and aluminum.

9. The gas barrier laminate according to any one of claims 6 to 8,
wherein the gas barrier layer further includes a surfactant.

10. The gas barrier laminate according to any one of claims 6 to 9,
wherein, when a gas barrier laminate cut out into a 5 cm square is placed on a platen and a maximum interval occurring between the gas barrier laminate and the platen is defined as warpage, the warpage measured by a gap gauge at 23°C is 5 mm or less.

11. The gas barrier laminate according to any one of claims 6 to 10,
wherein the base material layer includes at least one selected from a thermosetting resin and a thermoplastic resin.

12. The gas barrier laminate according to any one of claims 6 to 11,
wherein a thickness of the gas barrier layer is equal to or more than 0.01 µm and equal to or less than 15 µm.

13. The gas barrier laminate according to any one of claims 6 to 12,
wherein an oxygen permeability at 20°C and 90% RH in 1 µm of the gas barrier layer is 30 ml/(m²·day·MPa) or less.

## Patentansprüche

1. Gassperrpolymer, gebildet durch Erhitzen einer Mischung, enthaltend eine Polycarbonsäure und eine Polyaminverbindung,
wobei in einem Infrarot-Absorptionsspektrum des Gassperrpolymers ein Flächenverhältnis einer Amidbindung, angegeben durch B/A, 0,370 oder mehr beträgt, wenn eine Gesamtpeakfläche in einem Bereich einer Absorptionsbande von gleich oder größer als 1493 cm⁻¹ und gleich oder kleiner als 1780 cm⁻¹ A ist und eine Gesamtpeakfläche in einem Bereich einer Absorptionsbande von gleich oder größer als 1598 cm⁻¹ und gleich oder kleiner als 1690 cm⁻¹ B ist, und
wobei in dem Infrarot-Absorptionsspektrum ein Flächenverhältnis eines Carboxylats, angegeben durch D/A, 0,450 oder weniger beträgt, wenn eine Gesamtpeakfläche in einem Bereich einer Absorptionsbande von gleich oder größer als 1493 cm⁻¹ und gleich oder kleiner als 1598 cm⁻¹ D ist.

2. Gassperrpolymer gemäß Anspruch 1,
wobei in dem Infrarot-Absorptionsspektrum ein Flächenverhältnis einer Carbonsäure, angegeben durch C/A, 0,500 oder weniger beträgt, wenn eine Gesamtpeakfläche in einem Bereich einer Absorptionsbande von gleich oder größer als 1690 cm⁻¹ und gleich oder kleiner als 1780 cm⁻¹ C ist.

3. Gassperrpolymer gemäß Anspruch 1 oder 2,
wobei (Molzahl, der in der Polycarbonsäure enthaltenen -COO-Gruppen in der Mischung)/(Molzahl, der in der Polyaminverbindung enthaltenen Aminogruppen in der Mischung) = mehr als 100/22 und gleich oder weniger als 100/99 ist.

4. Gassperrpolymer gemäß einem der Ansprüche 1 bis 3,
wobei die Polycarbonsäure eine Art oder zwei oder mehr Arten von Polymeren, ausgewählt aus Polyacrylsäure, Polymethacrylsäure und Copolymeren von Acrylsäure und Methacrylsäure, enthält.

5. Gassperrfilm, umfassend:
das Gassperrpolymer gemäß einem der Ansprüche 1 bis 4.

6. Gassperrlaminat, umfassend:
eine Grundmaterialschicht; und
eine Gassperrschicht, die auf mindestens einer Oberfläche der Grundmaterialschicht angeordnet ist und das Gassperrpolymer gemäß einem der Ansprüche 1 bis 4 enthält.

7. Gassperrlaminat gemäß Anspruch 6, ferner umfassend:
eine anorganische Materialschicht zwischen der Grundmaterialschicht und der Gassperrschicht.

8. Gassperrlaminat gemäß Anspruch 7,
wobei die anorganische Materialschicht aus einer Art oder zwei oder mehr Arten von anorganischen Materialien, ausgewählt aus der Gruppe, bestehend aus Siliciumoxid, Aluminiumoxid und Aluminium, gebildet ist.

9. Gassperrlaminat gemäß einem der Ansprüche 6 bis 8, wobei die Gassperrschicht ferner ein Tensid enthält.

10. Gassperrlaminat gemäß einem der Ansprüche 6 bis 9,
wobei der durch einen Spaltmesser bei 23°C gemessene Verzug 5 mm oder weniger beträgt, wenn ein in ein 5-cm-Quadrat ausgeschnittenes Gassperrlaminat auf eine Platte gelegt wird und ein maximales Intervall zwischen dem Gassperrlaminat und der Platte als Verzug definiert wird.

11. Gassperrlaminat gemäß einem der Ansprüche 6 bis 10,
wobei die Grundmaterialschicht mindestens eines, ausgewählt aus einem duroplastischen Harz und einem thermoplastischen Harz, enthält.

12. Gassperrlaminat gemäß einem der Ansprüche 6 bis 11,
wobei eine Dicke der Gassperrschicht gleich oder größer als 0,01 µm und gleich oder kleiner als 15 µm ist.

13. Gassperrlaminat gemäß einem der Ansprüche 6 bis 12,
wobei eine Sauerstoffpermeabilität bei 20°C und 90% relativer Luftfeuchtigkeit in 1 µm der Gassperrschicht 30 ml/(m²·Tag·MPa) oder weniger beträgt.

## Revendications

1. Polymère faisant barrière aux gaz formé par chauffage d'un mélange incluant un acide polycarboxylique et un composé polyamine,
dans lequel, dans un spectre d'absorption infrarouge du polymère faisant barrière aux gaz, lorsqu'une surface de pic totale dans une plage d'une bande d'absorption égale ou supérieure à 1 493 cm⁻¹ et égale ou inférieure à 1 780 cm⁻¹ est A, et une surface de pic totale dans une plage d'une bande d'absorption égale ou supérieure à 1598 cm⁻¹ et égale ou inférieure à 1690 cm⁻¹ est B, un rapport surfacique d'une liaison amide désignée par B/A est 0,370 ou plus, et
dans lequel, dans le spectre d'absorption infrarouge, lorsqu'une surface de pic totale dans une plage d'une bande d'absorption égale ou supérieure à 1 493 cm⁻¹ et égale ou inférieure à 1 598 cm⁻¹ est D, un rapport surfacique d'un carboxylate désigné par D/A est 0,450 ou moins.

2. Polymère faisant barrière aux gaz selon la revendication 1,
dans lequel, dans le spectre d'absorption infrarouge, lorsqu'une surface de pic totale dans une plage d'une bande d'absorption égale ou supérieure à 1690 cm⁻¹ et égale ou inférieure 1780 cm⁻¹ est C, un rapport surfacique d'un acide carboxylique désigné par C/A est 0,500 ou moins.

3. Polymère faisant barrière aux gaz selon la revendication 1 ou 2,
dans lequel (nombre molaire de groupes -COO- inclus dans l'acide carboxylique dans le mélange)/(nombre molaire de groupes amino inclus dans le composé polyamine dans le mélange) = supérieur à 100/22 et égal ou inférieur à 100/99.

4. Polymère faisant barrière aux gaz selon l'une quelconque des revendications 1 à 3,
dans lequel l'acide polycarboxylique inclut un type ou deux ou plusieurs types de polymères choisis parmi l'acide polyacrylique, l'acide polyméthacrylique et des copolymères d'acide acrylique et d'acide méthacrylique.

5. Film faisant barrière aux gaz comprenant :
le polymère faisant barrière aux gaz selon l'une quelconque des revendications 1 à 4.

6. Stratifié faisant barrière aux gaz comprenant :
une couche de matériau de base ; et
une couche faisant barrière aux gaz prévue sur au moins une surface de la couche de matériau de base et incluant le polymère faisant barrière aux gaz selon l'une quelconque des revendications 1 à 4.

7. Stratifié faisant barrière aux gaz selon la revendication 6, comprenant en outre :
une couche de matériau inorganique entre la couche de matériau de base et la couche faisant barrière aux gaz.

8. Stratifié faisant barrière aux gaz selon la revendication 7,
dans lequel la couche de matériau inorganique est formée d'un type ou de deux ou plusieurs types de matériaux inorganiques choisis parmi le groupe consistant en oxyde de silicium, oxyde d'aluminium et aluminium.

9. Stratifié faisant barrière aux gaz selon l'une quelconque des revendications 6 à 8, dans lequel la couche faisant barrière aux gaz inclut en outre un tensioactif.

10. Stratifié faisant barrière aux gaz selon l'une quelconque des revendications 6 à 9, dans lequel, lorsqu'un stratifié faisant barrière aux gaz coupé dans un carré de 5 cm est placé sur un plateau et un intervalle maximum se trouvant entre le stratifié faisant barrière et le plateau est défini comme une déformation, la déformation mesurée par une jauge d'épaisseur à 23 °C est 5 mm ou moins.

11. Stratifié faisant barrière aux gaz selon l'une quelconque des revendications 6 à 10,
dans lequel la couche de matériau de base inclut au moins un élément choisi parmi une résine thermodurcissable et une résine thermoplastique.

12. Stratifié faisant barrière aux gaz selon l'une quelconque des revendications 6 à 11,
dans lequel une épaisseur de la couche faisant barrière aux gaz est égale ou supérieure à 0,01 µm et égale ou inférieure à 15 µm.

13. Stratifié faisant barrière aux gaz selon l'une quelconque des revendications 6 à 12,
dans lequel une perméabilité à l'oxygène à 20 °C et à une HR à 90 % dans 1 µm de la couche faisant barrière aux gaz est 30 ml/(m²·jour·Mpa) ou moins.
